# EUROPEAN PATENT SPECIFICATION

(11) **EP 2 641 723 B1**
(45) Date of publication and mention of the grant of the patent: **20.01.2016**
(21) Application number: 11841750.0
(22) Date of filing: 30.09.2011
(51) Int. Cl.: B29C 65/00, B62D 65/00, B65D 61/00

(54) **METHOD FOR PATTERNING PROTECTIVE FILM FOR VEHICLE AND METHOD FOR MANUFACTURING PROTECTIVE FILM FOR VEHICLE**
VERFAHREN ZUR STRUKTURIERUNG EINER SCHUTZFOLIE FÜR FAHRZEUGE UND HERSTELLUNGSVERFAHREN FÜR DIE SCHUTZFOLIE FÜR FAHRZEUGE
PROCÉDÉ DE FORMATION DE MOTIF SUR UN FILM PROTECTEUR POUR VÉHICULE ET PROCÉDÉ DE FABRICATION D'UN FILM PROTECTEUR POUR VÉHICULE

(30) Priority: 15.11.2010 JP 2010254537
(43) Date of publication of application: 25.09.2013
(73) Proprietor: F.E. Trade Co., Ltd., Fujisawa-shi, Kanagawa 251-0016 (JP)
(72) Inventor: SHIMIZU, Koichi, Fujisawa-shi Kanagawa 251-0016 (JP)
(74) Representative: Michalski Hüttermann & Partner Patentanwälte mbB
(86) International application number: PCT/JP2011/072635
(87) International publication number: WO 2012/066858

(56) References cited:
- DE-A1- 10 340 245
- JP-A- 6 255 873
- JP-A- 7 237 569
- JP-A- 9 108 622
- JP-A- 9 226 007
- JP-A- 9 277 379
- JP-A- 63 038 025
- JP-A- H10 118 987
- JP-A- 2002 049 327
- JP-A- 2002 505 232
- JP-A- 2005 119 367
- JP-A- 2006 347 241
- JP-U- H0 316 744
- US-A1- 2010 028 666

## Description

### Technical Field

The present invention relates to a vehicle protection film patterning method for conducting the patterning of vehicle protection film attached to the non-planar parts of a vehicle, and a vehicle protection film manufacturing method.

### Background Art

Traditionally, vehicle protection films attached onto the parts of vehicles have been known (for instance, refer to Patent literature 1 and 2).

The attaching method for the protection adhesive film described in patent literature 1 is such that perforated adhesive film is attached so that the hole portions are positioned at the site where the coating of protection adhesive film is not required, the temporary protective adhesive film of the coated film is then attached and within [the portions of] the temporary protective adhesive film of the coated film, the portion above the hole portions of the perforated adhesive film described above is removed.

Moreover, regarding the film laminated body according to patent literature 2, the film is made by laminating several sheets; and a vehicle coated part, non-adhesive part for separating, and a shape change prevention part which is between the former two, are provided. Moreover, regarding the film laminated body according to the patent literature 2, at the site where the vehicle coated part and the shape change prevention part are adjacent to each other, perforations to be cut are provided.
Patent literature 1: Japanese published unexamined application H5-237935 Gazette
Patent literature 2: Japanese published unexamined application 2007-50622 Gazette
   DE 10340245 describes a process for producing film material pack for application to the surface of at least two vehicle body components comprising measuring three dimensional surfaces and transferring them to a two dimensional plane.

### Summary of invention

Incidentally, the vehicle protection film described in the patent literature 1 and 2 can only be dealt with by one-off order, and large quantity sales effects cannot be hoped for, so currently very high prices are prevalent.

Moreover, it is difficult to provide highly precise patterning since vehicle parts have non-planar shapes such as complex solid shapes.

The purpose of the present invention is to provide a vehicle protection film patterning method and vehicle protection film manufacturing method which enables highly precise patterning and also enables vehicle protection films to be low priced.

In a vehicle protection film patterning method which conducts the patterning of vehicle protection film for attaching to the non-planar shaped parts of a vehicle, the vehicle protection film patterning method of the present invention comprises the following steps:
a sheet marking step wherein a pattern sheet is applied on the parts, and the pattern sheet is marked along the edge of the parts;
a film cutting step wherein the pattern film that is stretchable and planar shaped is cut into a size greater than the region marked by the sheet marking step;
a film attaching step wherein the pattern film that was cut out by the film cutting step is attached to the parts while wrinkles and gatherings are being stretched;
a film marking step wherein the pattern film that was attached during the film attaching step is marked along the edge of the parts;
a film separating step wherein the pattern film that was marked by the film marking step is separated from the parts; and
a film planarization step wherein the pattern film separated by the film separating step undergoes shape changes into a flat shape.

Moreover, a shape data reading step can be furthermore comprised in which, within [the portion of] the pattern film that was subjected to shape changes into a planar shape by the film planarization step, the shape data of the regions marked by the film marking step is read using a scanner.

Moreover, during the film marking step, it can be designed such that the pattern film can be marked by dotted lines along the edge of the parts.

Regarding the vehicle protection film manufacturing method of the present invention, in the vehicle protection film manufacturing method which manufactures vehicle protection film attached to the non-planar shaped parts of the vehicle, the vehicle protection film patterning method is comprised.

According to the present invention, high precision patterning is enabled and also vehicle protection film cost can be reduced.

### Brief description of drawings

Fig. 1 is a flow chart showing the flow of the vehicle protection film patterning method of one embodiment of the present invention
Fig. 2 is an explanatory drawing (#1) for explaining the vehicle protection film patterning method of one embodiment of the present invention
Fig. 3 is an explanatory drawing (#2) for explaining the vehicle protection film patterning method of one embodiment of the present invention
Fig. 4 is an explanatory drawing (#3) for explaining the vehicle protection film patterning method of one embodiment of the present invention
Fig. 5 is an explanatory drawing (#4) for explaining the vehicle protection film patterning method of one embodiment of the present invention
Fig. 6 is an explanatory drawing (#5) for explaining the vehicle protection film patterning method of one embodiment of the present invention
Fig. 7 is an explanatory drawing (#6) for explaining the vehicle protection film patterning method of one embodiment of the present invention
Fig. 8 is an explanatory drawing (#7) for explaining the vehicle protection film pattering method of one embodiment of the present invention
Fig. 9 is an explanatory drawing (#8) for explaining the vehicle protection film patterning method of one embodiment of the present invention
Fig. 10 is an explanatory drawing (#9) for explaining the vehicle protection film patterning method of one embodiment of the present invention
Fig. 11 is an explanatory drawing (#10) for explaining the vehicle protection film patterning method of one embodiment of the present invention
Fig. 12 is an explanatory drawing (#11) for explaining the vehicle protection film patterning method of one embodiment of the present invention

### Description of embodiments

The following will explain the vehicle protection film patterning method and vehicle protection film of the embodiments of the present invention while referring to the drawings.

Vehicles such as automobiles and the like are sold in a manner in which of course, each part has a different shape for each car type, but also in which, even for the same car type, each part has different shapes and specifications depending on its grade. Because of this, in the present embodiment, an explanation will be provided of a suitable vehicle protection film patterning method and vehicle protection film to produce and sell vehicle protection film for each car type and parts in which, when vehicle protection film is attached to the parts, the shape difference can be dealt with uniformly and also, the vehicle protection film has the completed product precision that is, for instance, within 1 mm from the edge of the outer periphery of each part.

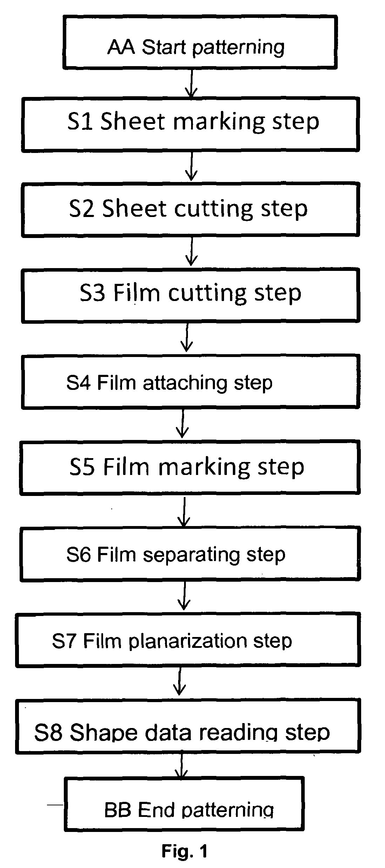

Fig. 1 is a flow chart showing the flow of the vehicle protection film patterning method of one embodiment of the present invention.

The vehicle protection film patterning method of the present embodiment, broadly classified, comprises sheet marking step (step S1), sheet cutting step (step S2), film cutting step (step S3), film attaching step (step S4), film marking step (step S5), film separating step (step S6), film planarization step (step S7), and shape data reading step (step S8).

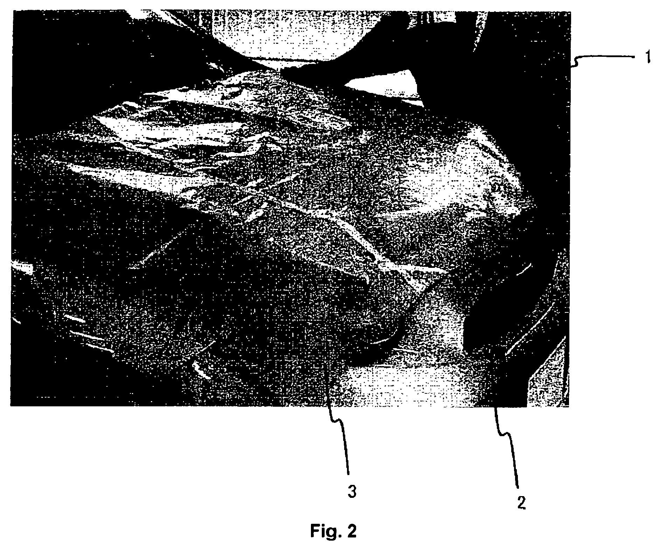

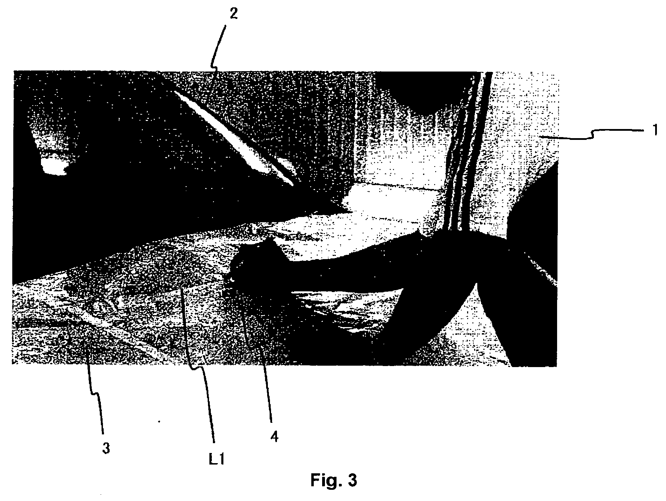

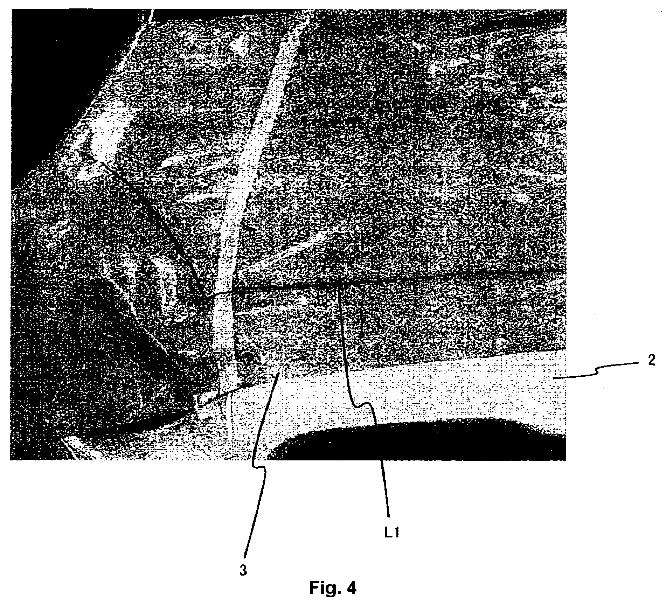

According to sheet marking step (step S1), as shown in Fig. 2, a worker 1 first applies pattern sheet 3 on a hood in which the pattern sheet 3 is one example of pattern sheet, for instance a simili paper and a hood is an example of the non-planar shaped part of car (vehicle) 2. Then, as shown in Fig. 3, the worker 1 marks on the pattern sheet 3 along the edge of the hood with solid line L1 using a black marker 4. Thereby, as shown in Fig. 4, the region marked by the solid line L1 on pattern sheet 3 becomes a hood shape.

Moreover, the marking does not have to be the solid line L1 using black marker 4, but can be one using a white or other color or intermittent lines or dots, and as long as the edge position is expressed, another form can replace the marking.

As a pattern sheet, paper is low priced, but other sheets such as cloth sheet, synthetic resin sheet and the like can be used.

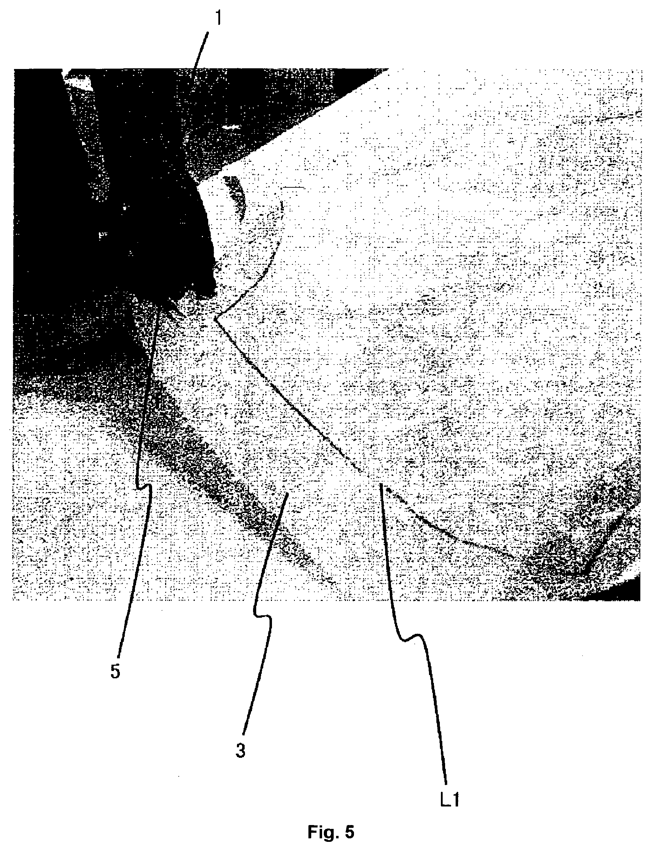

According to sheet cutting step (step S2), as shown in Fig. 5, a worker 1 cuts up the pattern sheet 3 for instance about 5 cm outside of the region marked by the solid line L1 using for instance a scissors 5.

As far as the size to cut up the pattern sheet 3, it can be cut up to the same size as one to cut up the pattern film 6 later described (size larger than the region marked). Moreover, even if the pattern sheet 3 is not cut out here, pattern film 6 later described can be cut out based on the marking position, so sheet cutting step (step S2) can be omitted. However, by cutting out the pattern sheet 3, the cut-out of pattern film 6 can be facilitated thereby.

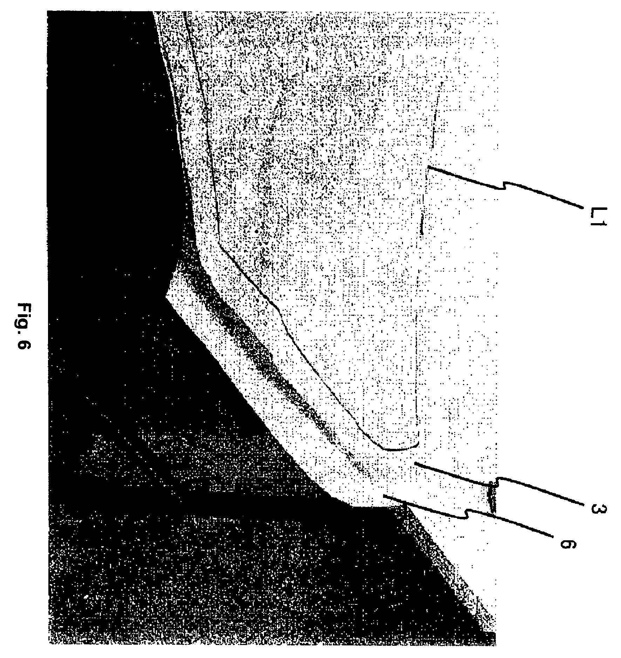

According to film cutting step (S3), as shown in Fig. 6, the worker 1 cuts out the pattern film 6 that is stretchable and of a planar shape using for instance a cutter knife, to the same size for instance as the pattern sheet 3 that was cut out. At this time, the worker 1 can place the pattern sheet 3 that was cut out on the top surface of the pattern film 6 that is spread in a planar shape, and cut out the pattern film 6.

Moreover, as pattern film 6, for instance "7510CC" (manufactured by Venture Tape, polyurethane, film thickness 165µm, stretchability 410%, 4 layer structure (protection film, film main body, adhesive layer, liner (mat board)), "Protection Film Premium" (manufactured by XPEL, polyurethane, film thickness 152µm, stretchability 435%, 4 layer structure (protection film, film main body, adhesive layer, liner (mat board)), "NTECH Protection Film" (manufactured by Neo Tech, polyurethane, film thickness 163µm, stretchability 400%, 3 layer structure (film main body, protection film, adhesive layer, liner (mat board)) and the like can be used, but as long as it has at least stretchability and can be attached to a hood (parts), it can be replaced.

At film attaching step (step S4), the worker 1 uniformly sprays, for instance, liquid "film-on" (manufactured by CPFilms) water solution as a sliding agent between the attaching side surface of the pattern film 6 and the hood until it drips, and places pattern film 6 on the hood. The pattern film 6, when placed on a hood like this, in the case of the "7510CC" and "Protection Film Premium," comprise a film main body with the protection film and liner (mat board) separated, and adhesive layers. Moreover, gel (for instance one manufactured by EXPEL) can be coated instead of liquid 'Film-on'.

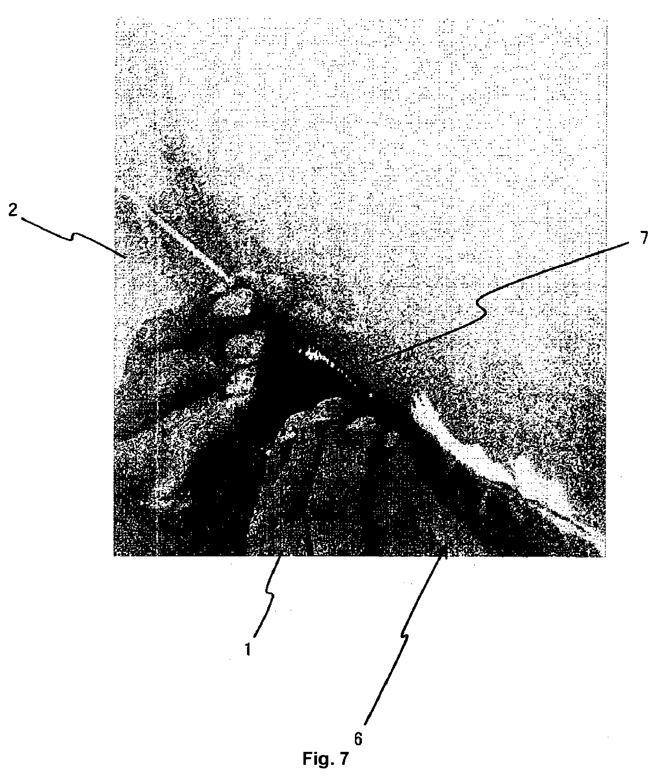

Then, the worker 1 sprays the "Film-on" on the surface of pattern film 6 as well, and as shown in Fig. 7, draws the surface of pattern film 6 using squeegee 7, and attaches the pattern film 6 on the hood. At this time, the "Film-on" water solution pooled between pattern film 6 and the hood can be attached on by drawing the water solution as though it is scraped outside of the attaching surface.

Depending on the shape of the attaching target part (here it is a hood), but with the basic attaching sequence, it is good if, while drawing from the center part of pattern film 6 to the peripheral part using squeegee 7, the water solution and air bubbles of the attaching surface is scraped out. Likewise, the worker 1 attaches the pattern film 6 up to the outer edge of the hood.

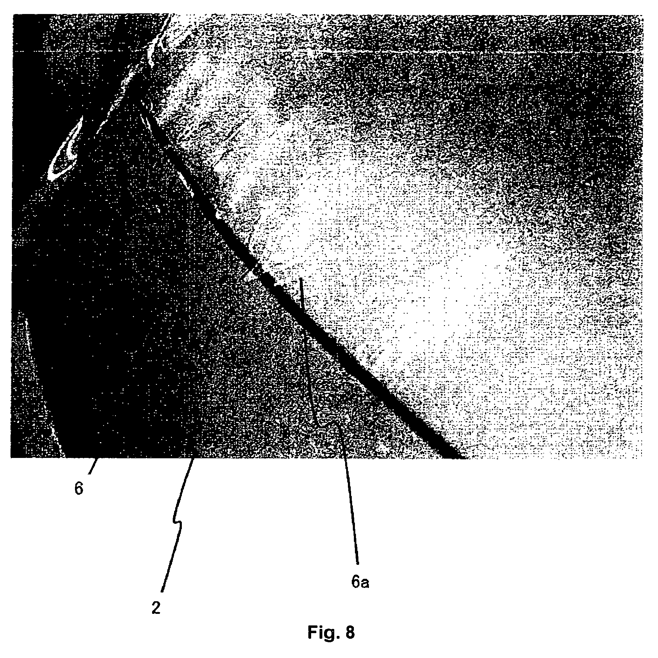

When attaching, regarding the complex R shaped part that is not planar in forming a hood its periphery and in particular the outer periphery edge part, as shown in Fig. 8, wrinkles or (gathering) 6a are generated on pattern film 6.

To minimize generating the wrinkles 6a and minimize the size differences between the completed product vehicle protection film and pattern film 6, the worker 1 engages in the attaching, and cuts up the extra parts generated on the outer periphery part of pattern film 6. The target is about, for instance, 2cm on the outer periphery from the edge of the hood.

Even so, to deal with generation of wrinkles 6a, the worker 1uses the stretchability of pattern film 6 itself, and, while stretching the pattern film 6 to the periphery part, attaches on by dispersing the wrinkles 6a.

Due to the tension added to the stretched sites and the periphery thereof, the adhesiveness of the pattern film 6 to the hood becomes insufficient and pattern film 6 floats up.

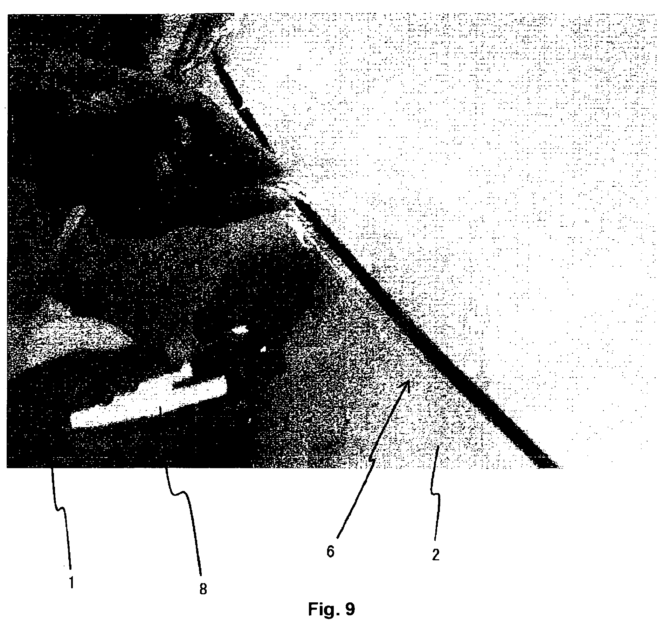

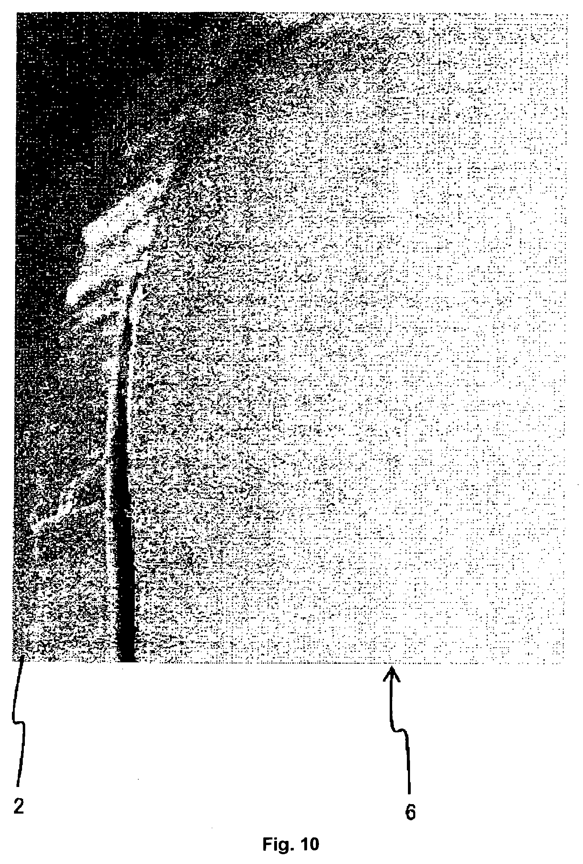

At the time, as shown in Fig. 9, isopropyl alcohol water solution (spray 8) is sprayed between the pattern film 6 at the sites of insufficient adhesion and the hood, and then using squeegee 7 again, pattern film 6 is attached by drawing it to the outer side of the surface to be attached as though scraping out the water solution, thereby obtaining strong adhesiveness. As shown in Fig. 10, attaching is completed by getting rid of all wrinkles 6a.

Moreover, particularly regarding parts other than the hood, there are cases with complex R shaped parts and the like; in such cases, pattern film 6 can be slit to reproduce the curved shapes.

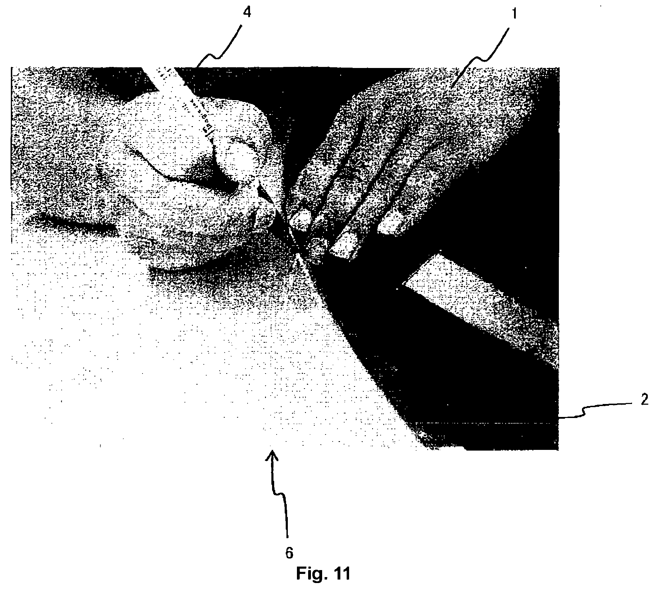

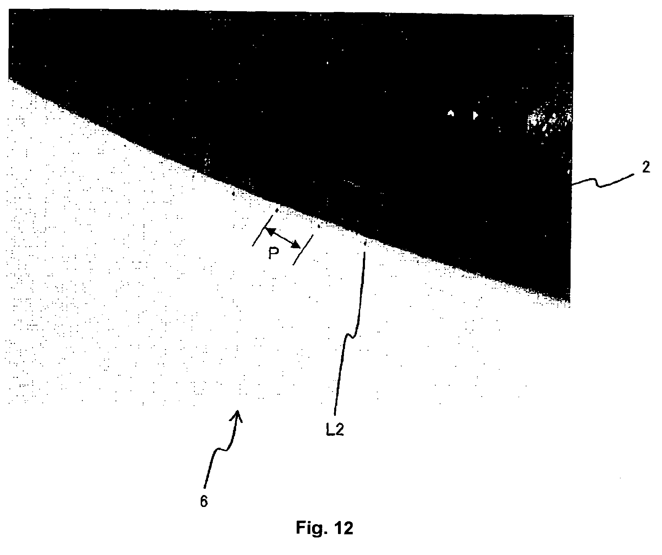

According to film marking step (step S5), the worker 1, as shown in Fig. 11, marks on the pattern film 6 along the edge of the hood with a dotted line L2 of for instance 5mm pitch P using a black marker 4. Thereby, as shown in Fig. 12, the region marked by the dotted line L2 on pattern film 6 take the shape of the hood. Moreover, the dotted line L2 becomes an outer periphery line of the hood by being connected with solid lines later.

Moreover, the marking does not have to be dotted line L2 by a black marker 4, but can be a marker of white or other colors or continuous or intermittent lines; if the edge position can be expressed, it can be replaced by another form. However, by using the dotted line L2 for marking, the edge of the hood can be accurately expressed.

When writing dotted line L2, to make the dotted line L2 as close as possible to the hood edge, the marker 4 is applied on the edge part from an angle of 45 degrees (angle with respect to the surface of hood), and dotted line L2 is written to control the deviation by the dot diameter, so that the line becomes more uniform and closer to the edge.

Moreover, if the hood edge is not a straight line but curved, the dotted line L2 is written more closely than 5 mm; then when the dotted lines are connected by a solid line at the end, it is good if the shape is clearly expressed.

Moreover, after writing dotted line L2, it is good, if assuming the procedure of stretching the vehicle protection film to the hood, to directly write technical information regarding the partial attaching sequence and method of finishing the edge part and the like (for instance, whether to stop at the edge or whether it is a wrapping method conducted by folding to the back and pulling in) on the surface of the pattern film 6.

According to film separating step (step S6), the worker 1 separates from the hood the pattern film 6 marked by dotted line L2. At this time, for instance, if warm water above 60°C is sprayed on the surface of pattern film 6, the adhesive power of pattern film 6 becomes weakened, and separating is facilitated. To minimize the deviation of the dotted line L2 position due to the stretching of pattern film 6 generated by the tension of pattern film 6, it is good if the separating operation is executed by lifting the pattern film 6 at an angle greater than 45 degrees relative to the hood.

According to film planarization step (Step S7), separated pattern film 6 undergoes shape changes into a planar shape. Specifically, the worker 1 sufficiently sprays the "Film-on" on the tentatively placed sheet where pattern film 6 is placed facing the attaching surface of the pattern film 6, and the pattern film 6 is placed on the tentatively placed sheet. Moreover, the tentatively placed sheet is a transparent non-stretchable sheet made of synthetic resin such as PET (polyethylene terephthalate).

Then, the worker 1 sprays the "Film-on" on the surface of pattern film 6, and conditions the surface to be slidable without adding extra force using the squeegee 7. It is good if the wrinkles that are generated at this time by the float or tension of pattern film 6 are left alone, for instance for 30 to 60 minutes in a temperature environment of, for instance, at 15°-25°C, without forced drawing.

As the time passes, due to the stretchability possessed by pattern film 6, the stretched part and the like return to the same planar shape without unevenness before attaching. When this condition is returned, the worker 1 sprays the "Film-on" on the surface of pattern film 6 again, and while drawing the pattern film 6 with squeegee 7, it is completely attached on the tentatively placed sheet, and made into a planar surface.

According to shape data reading step (step S8), the worker 1 reads the shape data of at least the marked region, among the [portions of] pattern film 6 subjected to shape changes into a planar shape, using a scanner.

For instance, the worker 1 scans pattern film 6 using a flat head scanner and loads this into a personal computer (hereinafter called a PC). Since there are parts with various sizes, a hood and the like becomes scanned data with split shapes, but it is good if the image inside the PC is synthesized, for instance, using Photo Shop (registered trade mark: Adobe Systems Co.,), and reassembled into one part. After that, to create a cut line of the vehicle protection film, Illustrator (made by Adobe System) is used to trace the line (operation of aligning with dotted line L2 to protect the outer periphery line). Moreover, it is good if the operation observes the rule of no expansions and no contractions.

Based on the reassembled data described above (pattern data), using the large type cutting plotter with the films for vehicle protection film (for instance polyurethane similar to pattern film 6 or other synthetic resin and the like) provided, the vehicle protection film is cut out.

The worker 1 attaches again onto the actual vehicle using the cut-out vehicle protection film, and confirms precision at attaching time and provides a final correction. By following this series of procedures, vehicle protection film for every car type and parts can be completed having a level of precision of, for instance, a maximum error distance of 1 mm with respect to the edge of each part.

According to the embodiment explained above, the vehicle protection film patterning method comprises sheet marking step (step S1), film cutting step (step S3), film attaching step (step S4), film marking step (step S5), film separating step (step S6), and film planarization step (step S7).

Because of this, even if the parts are non-planar such as complex solid shapes, high precision patterning can be conducted. Moreover, based on the subjection of the pattern film to shape changes into a planar shape using film planarization step (step S7), vehicle protection film can be produced many times by reading shape data or creating a planar shape pattern .

Hence, according to the embodiment, not only can highly precise patterning be executed, but also the vehicle protection film cost can be decreased.

Furthermore, regarding the vehicle protection film patterning method and vehicle protection film of the present embodiment, by enhancing the degree of market recognition by the sales efforts of the applicant and arousing demand, the vehicle protectability is increased, and as a result, this is connected to making the number of ownership years longer, and so from the standpoint of natural resource protection, there is no minus factor.

Moreover, the vehicle protection film patterning method of this embodiment furthermore comprises a shape data reading step wherein, using a scanner, the shape data is read of the region marked by the film marking step within [the portion of] the pattern film 6 subjected to shape changes into planar shape by the film planarization step. Moreover, a planar pattern can be created from pattern film 6 subject to shape changes into a planar shape, but by being taken in as shape data, the step to create the planar pattern can be omitted. Moreover, by using shape data, it is no longer necessary to place the pattern at all of the manufacturing sites of the vehicle protection film.

Moreover, according to the embodiment, in the film marking step, dotted line L2 is marked on the pattern film 6 along the edge of the hood (part). Because of this, patterning of the vehicle protection film can be executed with greater precision.

Moreover, according to the embodiment, a car 2 was used in the explanation as an example of a vehicle, but the vehicle protection film patterning method and vehicle protection film of the embodiment can be naturally applied to other vehicles such as motor cycles, bicycles and the like.

Moreover, according to the embodiment, a hood was used as an example of a non-planar part, but as non-planar parts, other parts can be used such as, for instance, a bumper, spoiler, radiator grill, headlight, fog light, roof front surface, door mirror, front fender, A pillar, B pillar, bottom of door outer handle, door lower part, door edge, door step, quarter panel, fuel filler lid and its surrounding area, locker panel, rear gate, rear bumper gate step, rear bumper trunk step, rear bumper side part, rear lower spoiler, rear outer handle and other parts.

### Reference signs list

- 1:: worker
- 2:: car (vehicle)
- 3:: pattern paper (pattern sheet)
- 4:: marker
- 5:: scissors
- 6:: pattern film
- 6a:: wrinkle (or gathering)
- 7:: squeegee
- 8:: spray

## Claims

1. Vehicle protection film patterning method wherein vehicle protection film that is attached to the non-planar shaped parts of a vehicle (2) is patterned, the vehicle protection film patterning method comprising:
a sheet marking step wherein a pattern sheet (3) is applied on the parts, and
the pattern sheet (3) is marked along the edge of the parts;
a film cutting step wherein pattern film (6) that is stretchable and planar shaped is cut into a size greater than the region marked by the sheet marking step;
a film attaching step wherein the pattern film (6) that was cut out by the film cutting step, is attached to the parts while wrinkles and gatherings are being stretched;
a film marking step wherein the pattern film (6) that was attached during the film attaching step is marked along the edge of the parts;
a film separating step wherein the pattern film (6) that was marked by the film marking step is separated from the parts; and
a film planarization step wherein the pattern film (6) separated by the film separating step undergoes shape changes into a flat shape.

2. Vehicle protection film patterning method according to Claim 1, further comprising a shape data reading step wherein, within the portions of the pattern film (6) subjected to shape changes into a planar shape by the film planarization step, at least the shape data of the region marked by the film marking step is read by using a scanner.

3. Vehicle protection film patterning method according to Claims 1 or 2, wherein the film marking step marks the pattern film (6) using a dotted line along the edge of the parts.

4. Vehicle protection film manufacturing method wherein, the vehicle protection film manufacturing method which produces the vehicle protection film attached to the non-planar shaped parts of a vehicle comprises the vehicle protection film patterning method of any one of Claims 1 through 3.

## Patentansprüche

1. Fahrzeugschutzfolienmusterherstellungsverfahren, wobei ein Muster für eine Fahrzeugschutzfolie hergestellt wird, die an nicht flachen Teilen eines Fahrzeugs (2) befestigt wird, wobei das Fahrzeugschutzfolienmusterherstellungsverfahren aufweist:
einen Schnittmusterbogenmarkierungsschritt, in dem ein Schnittmusterbogen (3) auf Teile aufgebracht und der Schnittmusterbogen (3) entlang des Randes der Teile markiert wird;
einen Folienzuschneideschritt, in dem eine Musterfolie (6), die streckbar und flach geformt ist, in eine Größe geschnitten wird, die größer ist als der durch den Schnittmusterbogenmarkierungsschritt markierte Bereich;
einen Folienbefestigungsschritt, in dem die Musterfolie (6), die im Folienzuschneideschritt zugeschnitten wurde, an den Teilen befestigt wird, während Falten und Stauchungen durch strecken geglättet werden;
einen Folienmarkierungsschritt, in dem die Musterfolie (6), die während des Folienbefestigungsschritts befestigt wurde, entlang des Randes der Teile markiert wird;
einen Folientrennschritt, in dem die Musterfolie (6), die im Folienmarkierungsschritt markiert wurde, von den Teilen getrennt wird; und
einen Folienplanarisierungsschritt, in dem die im Folientrennschritt getrennte Musterfolie (6) Formänderungen in eine flache Form unterzogen wird.

2. Verfahren nach Anspruch 1, ferner mit einem Formdatenleseschritt, in dem innerhalb der Abschnitte der Musterfolie (6), die im Folienplanarisierungsschritt Formänderungen in eine flache Form unterzogen wurden, mindestens die Formdaten des im Folienmarkierungsschritt markierten Bereichs unter Verwendung eines Scanners gelesen werden.

3. Verfahren nach Anspruch 1 oder 2, wobei im Folienmarkierungsschritt die Musterfolie (6) unter Verwendung einer gestrichelten Linie entlang des Randes der Teile markiert wird.

4. Fahrzeugschutzfolienherstellungsverfahren, wobei das Fahrzeugschutzfolienherstellungsverfahren, in dem die an nicht flachen Teilen eines Fahrzeugs befestigte Fahrzeugschutzfolie hergestellt wird, das Fahrzeugschutzfolienmusterherstellungsverfahren nach einem der Ansprüche 1 bis 3 aufweist.

## Revendications

1. Procédé de formation de motifs sur un film de protection de véhicule dans lequel le film de protection de véhicule qui est fixé sur les parties de forme non planes d'un véhicule (2) est à motifs, le procédé de formation de motifs sur un film de protection de véhicule comprenant :
une étape de marquage d'une feuille dans laquelle une feuille de motifs (3) est appliquée sur les parties, et la feuille de motifs (3) est marquée le long de la bordure des parties ;
une étape de coupure du film dans laquelle le film à motifs (6) qui est étirable et de forme plane est coupé à une dimension plus grande que la zone marquée par l'étape de marquage de la feuille ;
une étape de fixation du film dans laquelle le film à motifs (6) qui a été coupé par l'étape de découpage du film, est fixé sur les parties pendant que les plis et les amoncellements sont étirés ;
une étape de marquage du film dans laquelle le film à motifs (6) qui a été fixé au cours de l'étape de fixation du film est marqué le long de la bordure des parties ;
une étape de séparation du film dans laquelle le film à motifs (6) qui a été marqué par l'étape de marquage du film est séparé des parties ; et
une étape d'aplanissement dans laquelle le film à motifs (6) séparé par l'étape de séparation du film subit des changements de forme pour atteindre une forme à plat.

2. Procédé de formation de motifs sur un film de protection de véhicule selon la revendication 1, comprenant en outre une étape de lecture de données de forme dans laquelle, dans les parties du film à motifs (6) assujetties aux changements de forme vers une forme plane dans l'étape d'aplanissement du film, au moins les données de forme de la zone marquée par l'étape de marquage du film sont lues en utilisant un scanner.

3. Procédé de formation de motifs sur un film de protection de véhicule selon les revendications 1 ou 2, dans lequel l'étape de marquage du film marque le film à motifs (6) en utilisant une ligne en pointillés le long de la bordure des parties.

4. Procédé de fabrication d'un film de protection de véhicule dans lequel, le procédé de fabrication du film de protection de véhicule qui produit le film de protection de véhicule fixé aux parties de formes non planes d'un véhicule comprend le procédé de formation de motifs sur un film de protection de véhicule selon l'une quelconque des revendications 1 à 3.
